# EUROPÄISCHE PATENTSCHRIFT

(11) **EP 2 347 022 B1**
(45) Veröffentlichungstag und Bekanntmachung des Hinweises auf die Patenterteilung: **26.02.2014**
(21) Anmeldenummer: 09782848.7
(22) Anmeldetag: 10.09.2009
(51) Int. Cl.: C22C 19/05, B23K 35/22

(54) **SCHWEISSZUSATZWERKSTOFF, VERWENDUNG DES SCHWEISSZUSATZWERKSTOFFES UND BAUTEIL**
Welding filler material, use of the welding filler material and component
Matériau d'apport de soudure, utilisation du matériau d'apport de soudure et composant

(30) Priorität: 04.11.2008 EP 08019282
(43) Veröffentlichungstag der Anmeldung: 27.07.2011
(73) Patentinhaber: Siemens Aktiengesellschaft, 80333 München (DE)
(72) Erfinder: ARJAKINE, Nikolai, 10555 Berlin (DE)
(86) Internationale Anmeldenummer: PCT/EP2009/061727
(87) Internationale Veröffentlichungsnummer: WO 2010/052049

(56) Entgegenhaltungen:
- EP-A- 1 728 586
- EP-A- 1 777 312
- EP-A- 1 835 040
- EP-A- 1 878 533
- WO-A-03/025237
- WO-A1-2005/054528
- GB-A- 2 153 845
- US-A- 5 240 491
- US-A- 6 027 584
- US-A1- 2004 115 086
- BANERJEE K ET AL: "EFFECT OF FILLER ALLOYS ON HEAT-AFFECTED ZONE CRACKING IN PREWELD HEAT-TREATED IN-738LC GAS-TUNGSTEN-ARC WELDS" METALLURGICAL AND MATERIALS TRANSACTIONS A: PHYSICAL METALLURGY &MATERIALS SCIENCE, ASM INTERNATIONAL, MATERIALS PARK, OH, US, Bd. 36A, Nr. 7, 1. Juli 2005 (2005-07-01), Seiten 1881-1890, XP009059582 ISSN: 1073-5623

## Beschreibung

Die Erfindung betrifft einen Schweißzusatzwerkstoff gemäß Anspruch 1 und eine Verwendung desselben gemäß Anspruch 11.

Superlegierungen auf Nickel-Basis haben von allen Hochtemperaturmaterialien die günstigste Kombination aus mechanischen Eigenschaften, Korrosionsbeständigkeit und Verarbeitbarkeit für den Gasturbinenbau für Flugzeuge und Kraftwerke. Die hohe Festigkeitssteigerung wird besonders durch die Teilchenhärtung mit sehr hohen Volumenanteilen der kohärenten y'-Phase Ni₃ (Al-Ti,Ta,Nb) ermöglicht. Legierungen mit höherem y'-Anteil gelten aber allgemein als nur bedingt schweißbar. Diese geringe Schweißbarkeit ist bedingt durch:
a) Nickel-Legierungen weisen allgemein eine relativ geringe Temperaturleitfähigkeit und einen relativ hohen thermischen Ausdehnungskoeffizient auf, ähnlich den Werten der austenitischen Stähle und der Co-Legierungen. Die eingebrachte Schweißwärme wird deshalb vergleichsweise langsam abgeführt, und die inhomogene Erwärmung führt zu hohen thermischen Spannungen, die zur thermischen Ermüdung führt, die nur mit großem Aufwand beherrscht werden kann.
b) Nickel-Legierungen sind sehr empfindlich gegen Heißrisse bei schnellem Wechsel der Temperaturzyklen im höheren Temperaturbereich. Ursache sind Korngrenzenanschmelzungen aufgrund von Schwankungen der chemischen Zusammensetzung (Seigerungen) oder Bildung von niedrigschmelzenden Phasen wie Sulfiden oder Boriden.
c) Nickel-Legierungen weisen allgemein einen hohen Anteil an der y'-Phase in einer γ-Matrix auf. Der Anteil der γ'-Phase liegt bei Nickel-Basis-Superlegierungen für Turbinenbauteile bis größer 40vol%. Dies bedingt eine hohe Festigkeit, aber auch geringe Duktilität des Werkstoffes insbesondere bei tiefen Temperaturen und im Bereich des Temperaturfeldes, in dem die γ/γ'-Ausscheidungsvorgänge stattfinden können ("Ductility-Dip Temperature Range" oder auch "Subsolidus Ductility Dip", je nach Legierung etwa 700°C bis 1100°C). Auftretende Spannungen können deshalb weniger durch plastisches Fließen abgebaut werden, was allgemein die Gefahr der Rissbildung erhöht.
d) Nickel-Legierungen zeigen das Phänomen der Post-Weld Heat Treatment Cracks, auch Strain-Age Cracking genannt. Dabei werden Risse charakteristischerweise in der ersten Wärmebehandlung nach dem Schweißen durch γ/γ'-Ausscheidungsvorgänge in der Wärmeeinflusszone oder - wenn der Schweißzusatz die y'-Phase bilden kann - auch im Schweißgut erzeugt. Ursache sind lokale Spannungen, die während des Ausscheidens der y'-Phase infolge der Kontraktion der umliegenden Matrix entstehen. Die Empfindlichkeit für Strain-Age Cracking nimmt mit zunehmenden Anteil an γ'-bildenden Legierungsbestandteilen wie Al und Ti zu, da dadurch auch der Anteil an y'-Phase im Gefüge zunimmt.

Werden artgleiche Schweißungen (Grund- und Zusatzwerkstoff sind identisch) bei Raumtemperatur mit konventionellen Schweißverfahren versucht, so kann derzeit für viele technische Ni-Basis-Superlegierungen für Turbinenschaufeln (z.B. IN 738 LC, Rene 80, IN 939) Rissbildung in Wärmeeinflusszone und im Schweißgut nicht vermieden werden.

Derzeit sind mehrere Verfahren und Verfahrensschritte bekannt, welche die Schweißbarkeit von Nickel-Basis-Superlegierungen verbessern:
a) Schweißen mit Vorwärmung:
   Eine Möglichkeit zur Vermeidung von Rissen beim Schweißen von Nickel-Basis-Superlegierungen mit hochfesten Zusatzwerkstoffen (ebenfalls Nickel-Basis-Superlegierungen) ist die Verringerung des Temperaturunterschiedes und damit des Spannungsgradienten zwischen Schweißstelle und dem Rest des Bauteils. Dies wird durch eine Vorwärmung des Bauteils während des Schweißens erreicht. Ein Beispiel ist das manuelle WIG-Schweißen in einer Schutzgasbox, wobei die Schweißstelle induktiv (mittels Induktionsspulen) auf Temperaturen größer 900°C vorgewärmt wird. Dies verkompliziert und verteuert aber den Schweißprozess wesentlich. Zudem kann dies aufgrund mangelnder Zugänglichkeit nicht für alle zu schweißende Bereiche durchgeführt werden.
b) Schweißen mit extrem geringer Wärmeeinbringung:
   Hierzu werden Schweißverfahren eingesetzt, welche eine sehr geringe Wärmeeinbringung in den Grundwerkstoff gewährleisten. Zu diesen Verfahren zählen Laserschweißen und Elektronstrahlschweißen. Beide Verfahren sind sehr kostspielig. Zudem erfordern sie Programmier- und Automatisierungsaufwand, der bei Reparaturschweißungen mit häufig wechselnden Schadensbildern und Schadenstellen unwirtschaftlich sein kann.

Aus der US 2004/0115086 A1 und der EP 1728586 A2 sind Nickel-Legierungen mit verschiedenen Zusätzen bekannt.

Es ist daher Aufgabe der Erfindung einen Schweißzusatzwerkstoff, eine Verwendung des Schweißzusatzwerkstoffs, ein Verfahren zum Schweißen und ein Bauteil aufzuzeigen, wodurch die Probleme aus dem Stand der Technik überwunden werden.

Die Aufgabe wird gelöst durch einen Schweißzusatzwerkstoff gemäß Anspruch 1 und durch eine Verwendung des Schweißzusatzwerkstoffs gemäß Anspruch 11.

In den Unteransprüchen sind vorteilhafte Ausgestaltungen ausgebildet, die in vorteilhafter Art und Weise beliebig miteinander kombiniert werden können.

Vorgeschlagen werden ein Schweißzusatzwerkstoff und eine Verwendung desselben, der die Reparaturschweißung von Gasturbinenschaufeln und anderen Heißgaskomponenten aus Nickel-Basis-Superlegierungen durch manuelles oder automatisiertes Schweißen bei Raumtemperatur ermöglicht. Der Schweißzusatzwerkstoff ist ebenfalls eine γ'-gehärtete Nickel-Basis-Superlegierung, unterscheidet sich aber insbesondere von dem Material eines Substrats eines zu reparierenden Bauteils. Die Schweißreparatur ermöglicht eine niederzyklische Festigkeit (LCF, low cycle fatigue), die in etwa 50% und mehr der Eigenschaften des Grundwerkstoffs entspricht (die Schweißung hält 50% der LCF Zyklen des Grundwerkstoffs).

Die Erfindung wird im Folgenden näher erläutert.

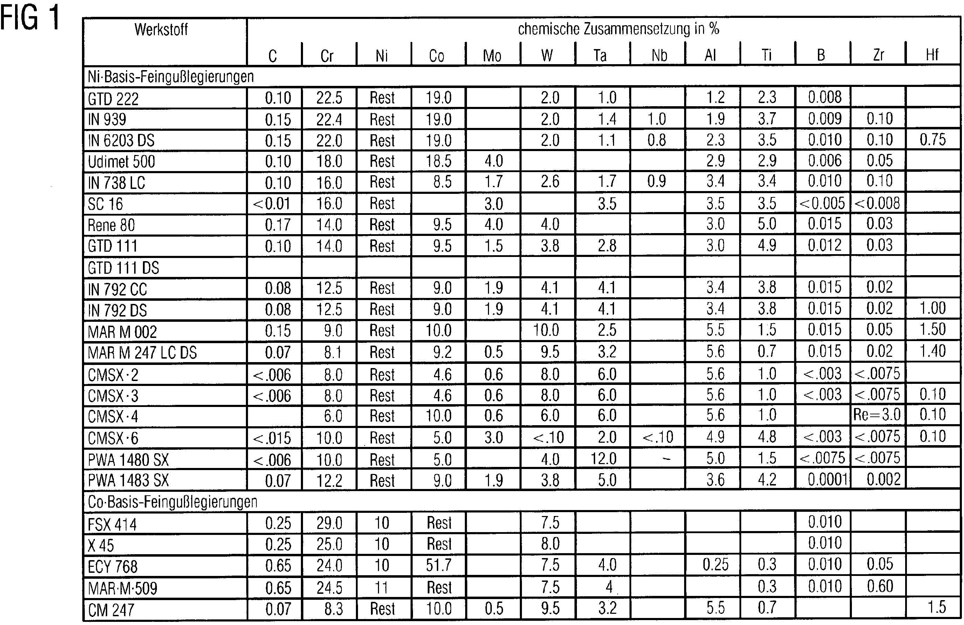

Es zeigen
- Figur 1: eine Auflistung der Zusammensetzung von Werkstof-fen, die mit dem erfindungsgemäßen Zusatzwerkstoff geschweißt werden können,
- Figur 2: eine Gasturbine,
- Figur 3: perspektivisch eine Turbinenschaufel und
- Figur 4: perspektivisch ein Brennkammerelement.

Erfindungsgemäß wird eine Erhöhung des Bor-Anteils als Legierungselement vorgeschlagen. Der Borlegierungsanteil soll zwischen 0.3wt% und 0.6wt% liegen. Diese Erhöhung soll die Heißrissbeständigkeit bei den artgleichen sowie artähnlichen Zusatzwerkstoffen verbessern. Der Zusatzwerkstoff, der die Reparaturschweißung von Gasturbinenschaufeln und anderen Heißgaskomponenten aus Ni-Basis-Superlegierungen durch manuelles oder automatisiertes Schweißen bei Raumtemperatur ermöglicht.

Mechanismus der Verbesserung der Heißrissbeständigkeit:
Die Heißrisse treten dann auf, wenn im Temperaturbereich, den sogenannten BTR (Brittleness Temperatur range) oder TIS (Temperaturintervall der Sprödigkeit) die örtliche Verformbarkeit zu gering ist, um die aufgebrachte durch das Schweißung Dehnung aufzunehmen. Im Vergleich zu den konventionellen Ni-Basis Superlegierungen, bei welchen Bor-Anteil bei max. 0.03wt% begrenzt ist, umhüllt das Bor-Eutektikum die Korngrenzen komplett und wirkt bei der Erstarrung als eine Art "Dämpfer" oder "Puffer" und nimmt die entstehenden Deformationskräfte auf. Dabei soll die Schmelztemperatur des Eutektikums niedriger sein als die Temperatur Tu - Temperatur, ab welche das Verformungsvermögen P nimmt wieder zu.

Die Grundwerkstoffe sollen nicht überhitzt werden. Deswegen werden und Verwendung den Schweißparameter mit niedriger Stromstärke und Zusatzwerkstoffen mit kleinen Durchmessern empfohlen.

Außerdem verbessert der erhöhte Bor-Legierungsanteil die Zeitstandfestigkeit und die Hitzebeständigkeit bei der parallelen Erhöhung der Oxidationsbeständigkeit in den aggressiven Medien.

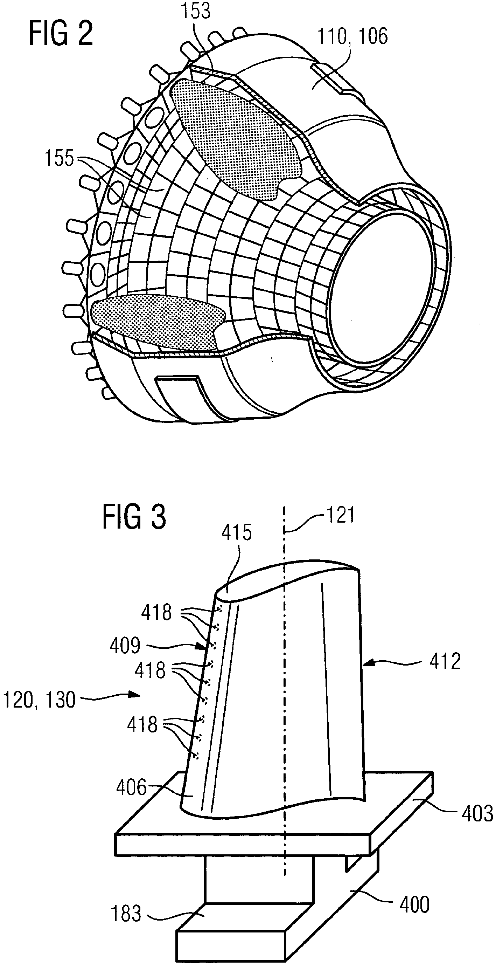

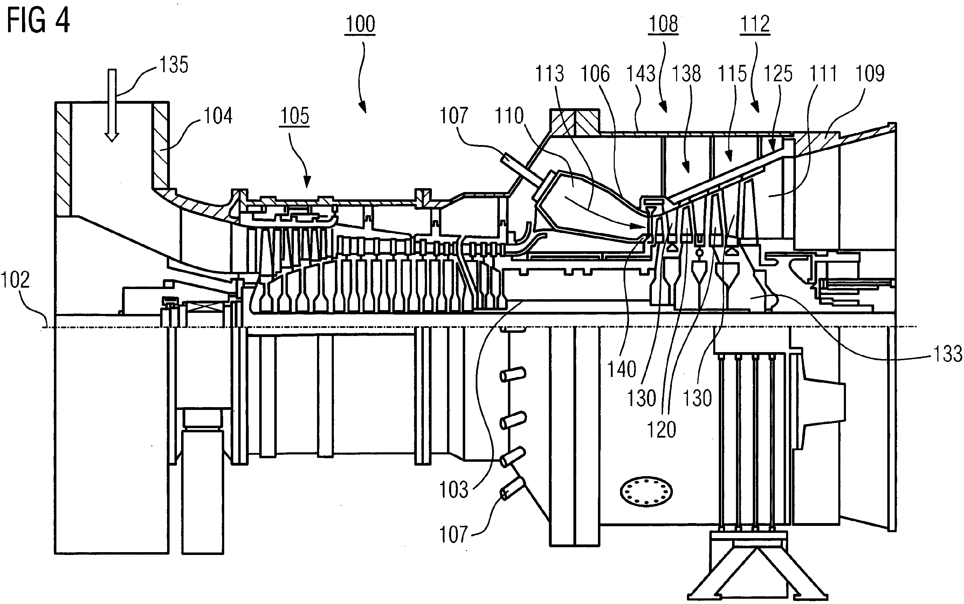

Vorgeschlagen wird ein Schweißprozess für das Schweißen von Bauteilen wie Heißgaskomponenten 138, 155 (Fig. 3, 4) und Turbinenschaufeln 120, 130 (Fig. 2) aus Nickel-Basis-Superlegierungen, der vorzugsweise folgende Charakteristika aufweist:
- Wärmebehandlung vor dem Schweißen mit dem Ziel der Vergröberung der γ'-Phase im Grundwerkstoff aus Nickel-Basis-Superlegierung (siehe EP 1 428 897 A1). Diese auch als Überalterung oder Overaging bezeichnete Wärmebehandlung erhöht die Duktilität und damit die Schweißbarkeit des Grundwerkstoffs.
- Schweißen ohne Vorwärmung (bei Raumtemperatur) mit konventionellen manuellen Schweißverfahren wie WIG- oder Plasmapulverschweißen oder alternativ Schweißen mit automatisierten Verfahren, wie Laserpulverschweißen oder automatisiertem Plasmapulverschweißen, ebenfalls bei Raumtemperatur.
- Verwendung von geschlossenen Schutzgas- oder Vakuumboxen, in die das gesamte Bauteil während des Schweißens zum Schutz vor Oxidation eingebracht wird, sind nicht erforderlich. Ebenso werden keine Durchflussboxen benötigt, in denen durch einen entsprechend großen Durchfluss von Schutzgas das Bauteil während des Schweißens geschützt wird.
- Für Grundwerkstoffe, die extrem zur Heißrissbildung und/oder Oxidation während des Schweißens neigen, wird die Verwendung von Schutzgas empfohlen, das Stickstoff zur Unterdrückung der Heißrissigkeit und/oder Wasserstoff zur Verringerung der Oxidation enthält (siehe EP 04011321.9).
- Wärmebehandlung nach dem Schweißen zur Homogenisierung von Grund- und Schweißzusatzwerkstoff: Lösungsglühung. Die Lösungsglühtemperatur sollte auf den Grundwerkstoff abgestimmt sein. Die Lösungsglühtemperatur muss oberhalb der Lösungsglühtemperatur, aber unterhalb der Solidustemperatur des Schweißzusatzwerkstoffes liegen. Das ein- oder mehrstufige Auslagern zur Einstellung der gewünschten γ'-Morphologie (Größe, Form, Verteilung) kann direkt im Anschluss oder später während der Prozessierung der Heißgaskomponenten erfolgen.

Dieser Schweißzusatzwerkstoff hat relativ gute Schweißeigenschaften bei Raumtemperatur. Dazu wurden die Anteile an Al und Ti in der Legierung so gewählt, dass eine sehr geringe Empfindlichkeit gegen Strain-Age Cracking resultiert. Der Chromgehalt wird so gewählt, so dass die Legierung eine korrosionsbeständige Cr₂O₃-Deckschicht bildet und ein ausreichendes Reservoir zur Regeneration dieser Schicht unter Betriebsbedingungen enthält.

**Eisen:** Eisen ist vorzugsweise auf maximal 1.5wt% limitiert, um die Oxidationsbeständigkeit der Legierung zu verbessern, und die Gefahr der Bildung von versprödenden TCP-Phasen zu verringern (TCP = topologigally closed packed).

**Silizium:** Silizium ist vorzugsweise limitiert auf maximal 0.5wt%, um die Heißrissigkeit zu minimieren.

Es wurden außerdem Grenzen festgestellt für die optionalen Bestandteile C, Fe, Mn, S, P, Hf, La, Si oder Zr, bei denen ein Optimum zwischen negativem und positivem Einfluß gegeben ist.

Beim Erstellen des Bauteils und beim Schweißen können sich Oxide und insbesondere Sulfide an den Korngrenzen bilden. Diese schwefel- und sauerstoffhaltigen, dünnen, zwischenkristallinen Eutektika verspröden einerseits die Korngrenzen. Andererseits haben sie eine niedrige Schmelztemperatur, was zu einer großen Korngrenzenrissanfälligkeit durch lokale Aufschmelzung der Korngrenzen führt.
Gegen die Sauerstoffversprödung hilft insbesondere eine lokale Veränderung der chemischen Zusammensetzung der Korngrenzen durch Zugabe von Hf, welches an der Korngrenze segregiert und dadurch die Korngrenzendiffusion des Sauerstoffs erschwert, und somit die Korngrenzenversprödung, die durch den Sauerstoff verursacht wird, behindert. Außerdem wird Hafnium in die y'-Phase eingebaut und erhöht dessen Festigkeit.

Die folgende Tabelle stellt die Erfindung dar (Angaben in wt%).

| Element | | Wirkung |
|---|---|---|
| Cr | 10.0-20.0 | Korrosionsschutz, erhöht die Sulfidationsbeständigkeit, Mischkristallhärtung |
| Co | 5.0-15.0 | reduziert die Stapelfehlenergie, dadurch erhöhte Kriechfestigkeit, verbessert die Lösungsglühbarkeit |
| Mo | 0.0-10.0 | Mischkristallhärtung, erhöht den E-Modul, verringert den Diffusionskoeffizienten |
| Ta | 0.5-3.5 | |
| Ti | 0.0-5.0 | substituiert A1 in y', erhöht den γ'-Volumenanteil |
| Al | 1.5-5.0 | y'-Bildung, einzig wirksamer Langzeitoxidationsschutz > ca. 950°C, starke Mischkristallhärtung |
| Fe | max. 1.5 | fördert Bildung von TCP-Phasen, verschlechtert Oxidationsbeständigkeit |
| Mn | max. 0.1 | |
| Si | max. 0.5 | fördert Bildung von TCP-Phasen, erhöht Heißrissigkeit |
| C | max. 0.25 | Karbidbildung |
| B | 0.3-0.6 | korngrenzwirksames Element (großes Atom), erhöht die Korngrenzenkohäsion, vermindert die Anrissgefahr, erhöht die Duktilität und Zeitstandfestigkeit, verhindert die Bildung von Karbidfilmen auf Korngrenzen, senkt die Oxidationsgefahr |
| Zr | 0.0-0.1 | bindet S und C, erhöht Heißrissbeständigkeit |
| Hf | 0.0 - 0.5 | Vermindert die Heißrissfähigkeit |
| | | beim Gießen, wird in y' eingebaut, erhöht dessen Festigkeit, verbessert die Oxidationsbeständigkeit |
| La | 0.0 - 0.1 | Bindet S, erhöht die Heißrissfähigkeit |
| S | 0.015 max. | Metallurgische Verunreinigung, erhöht die Heißrissigkeit |
| P | 0.03 max. | Metallurgische Verunreinigung, beeinträchtigt die Schweißbarkeit |
| Ni | Balance | |

Anwendungsbeispiel ist das Schweißen der Legierung Rene 80, insbesondere wenn es betriebsbeansprucht ist, mittels manuellem WIG-Schweißen und Plasmapulverauftragsschweißen. Weitere Schweißverfahren und Reparaturanwendungen sind nicht ausgeschlossen. Die Schweißreparaturstellen besitzen Eigenschaften, die "strukturelle" Reparaturen im Übergangsradius Schaufelblatt-Plattform oder im Schaufelblatt einer Turbinenschaufel erlauben.

Weitere nickelbasierte Zusatzstoffe können danach ausgewählt werden, wie groß der Anteil der y'-Phase ist, nämlich vorzugsweise größergleich 35 vol% bei einer vorzugsweise gegebenen maximalen Obergrenze von 75 vol%.

Vorzugsweise lassen sich Werkstoffe IN 738, IN 738 LC, IN 939, PWA 1483 SX oder IN 6203 DS mit dem erfindungsgemäßen Schweißzusatzwerkstoff schweißen.

Die Figur 2 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht.
Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrA1X-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Schweißzusatzwerkstoff
enthaltend (in wt%)
| | |
|---|---|
| 10.0% - 20.0% | Chrom (Cr), |
| 5.0% - 15.0% | Kobalt (Co), |
| 0.0% - 10.0% | Molybdän (Mo), |
| 0.5% - 3.5% | Tantal (Ta), |
| 0.0% - 5.0% | Titan (Ti), |
| 1.5% - 5.0% | Aluminium (Al), |
| 0.3% - 0.6% | Bor (B), |
| maximal 0.30% | Kohlenstoff (C), |
| maximal 1.8% | Eisen (Fe, |
| maximal 0.15% | Mangan (Mn), |
| maximal 0.03% | Schwefel (S), |
| maximal 0.06% | Phosphor (P), |
| maximal 0.7% | Hafnium (Hf), |
| maximal 0.2% | Lanthan (La), |
| maximal 0.7% | Silizium (Si), |
| maximal 0.2% | Zirkon (Zr), |
| Rest Nickel. | |

2. Schweißzusatzwerkstoff nach Anspruch 1,
der mindestens 0.01wt% Kohlenstoff (C) enthält.

3. Schweißzusatzwerkstoff nach Anspruch 1 oder 2,
der mindestens 0.1wt% Eisen (Fe) enthält.

4. Schweißzusatzwerkstoff nach Anspruch 1, 2 oder 3,
der mindestens 0.01wt% Mangan (Mn) enthält.

5. Schweißzusatzwerkstoff nach Anspruch 1, 2, 3 oder 4,
der mindestens 0.005wt% Schwefel (S) enthält.

6. Schweißzusatzwerkstoff nach Anspruch 1, 2, 3, 4 oder 5,
der mindestens 0.005wt% Phosphor (P) enthält.

7. Schweißzusatzwerkstoff nach Anspruch 1, 2, 3, 4, 5 oder 6,
der mindestens 0.05wt% Hafnium (Hf) enthält.

8. Schweißzusatzwerkstoff nach Anspruch 1, 2, 3, 4, 5, 6 oder 7,
der mindestens 0.01wt% Lanthan (La) aufweist.

9. Schweißzusatzwerkstoff nach Anspruch 1, 2, 3, 4, 5, 6, 7 oder 8,
der Silizium mindestens 0.05wt% Silizium (Si) enthält.

10. Schweißzusatzwerkstoff nach Anspruch 1, 2, 3, 4, 5, 6, 7, 8 oder 9,
der mindestens 0.05wt% Zirkon (Zr) enthält.

11. Verwendung eines Schweißzusatzwerkstoffes nach einem oder mehreren der Ansprüche 1 bis 10,
für nickelbasierte Werkstoffe.

## Claims

1. Weld filler,
containing (in wt%)
| | |
|---|---|
| 10.0% - 20.0% | chromium (Cr), |
| 5.0% - 15.0% | cobalt (Co), |
| 0.0% - 10.0% | molybdenum (Mo), |
| 0.5% - 3.5% | tantalum (Ta), |
| 0.0% - 5.0% | titanium (Ti), |
| 1.5% - 5.0% | aluminum (Al), |
| 0.3% - 0.6% | boron (B), |
| at most 0.30% | carbon (C), |
| at most 1.8% | iron (Fe), |
| at most 0.15% | manganese (Mn), |
| at most 0.03% | sulfur (S), |
| at most 0.06% | phosphorus (P), |
| at most 0.7% | hafnium (Hf), |
| at most 0.2% | lanthanum (La), |
| at most 0.7% | silicon (Si), |
| at most 0.2% | zirconium (Zr), |
| remainder nickel. | |

2. Weld filler according to Claim 1,
which contains at least 0.01 wt% carbon (C).

3. Weld filler according to Claim 1 or 2,
which contains at least 0.1 wt% iron (Fe).

4. Weld filler according to Claim 1, 2 or 3,
which contains at least 0.01 wt% manganese (Mn).

5. Weld filler according to Claim 1, 2, 3 or 4,
which contains at least 0.005 wt% sulfur (S).

6. Weld filler according to Claim 1, 2, 3, 4 or 5,
which contains at least 0.005 wt% phosphorus (P).

7. Weld filler according to Claim 1, 2, 3, 4, 5 or 6,
which contains at least 0.05 wt% hafnium (Hf).

8. The weld filler according to Claim 1, 2, 3, 4, 5, 6 or 7,
which has at least 0.01 wt% lanthanum (La).

9. Weld filler according to Claim 1, 2, 3, 4, 5, 6, 7 or 8,
which contains at least 0.05 wt% silicon (Si).

10. Weld filler according to Claim 1, 2, 3, 4, 5, 6, 7, 8 or 9,
which contains at least 0.05 wt% zirconium (Zr).

11. Use of a weld filler according to one or more of Claims 1 to 10,
for nickel-based materials.

## Revendications

1. Matériau d'apport de soudure
contenant (en pourcentages en poids)
| | |
|---|---|
| de 10,0% à 20,0% | de chrome ( Cr ), |
| de 5,0% à 15,0% | de cobalt ( Co ), |
| de 0,0% à 10,0% | de molybdène ( Mo ), |
| de 0,5% à 3,5% | de tantale ( Ta ), |
| de 0,0% à 5,0% | de titane ( Ti ), |
| de 1,5% à 5,0% | d'aluminium ( Al ), |
| de 0,3% à 0,6% | de bore ( B ), |
| au maximum 0,30% | de carbone ( C ), |
| au maximum 1,8% | de fer ( Fe ), |
| au maximum 0,15% | de manganèse ( Mn ), |
| au maximum 0,03% | de soufre ( S ), |
| au maximum 0,06% | de phosphore ( P ), |
| au maximum 0,7% | de hafnium ( Hf ), |
| au maximum 0,2% | de lanthane ( La ), |
| au maximum 0,7% | de silicium ( Si ), |
| au maximum 0,2% | de zirconium ( Zr ), |
| reste de nickel. | |

2. Matériau d'apport de soudure suivant la revendication 1,
qui contient au moins 0,01% en poids de carbone ( C ).

3. Matériau d'apport de soudure suivant la revendication 1 ou 2,
qui contient au moins 0,01% en poids de fer ( Fe ).

4. Matériau d'apport de soudure suivant la revendication 1, 2 ou 3,
qui contient au moins 0,01% en poids de manganèse ( Mn ).

5. Matériau d'apport de soudure suivant la revendication 1, 2, 3 ou 4,
qui contient au moins 0,005% en poids de soufre ( S ).

6. Matériau d'apport de soudure suivant la revendication 1, 2, 3, 4 ou 5,
qui contient au moins 0,005% en poids de phosphore ( P ).

7. Matériau d'apport de soudure suivant la revendication 1, 2, 3, 4, 5 ou 6,
qui contient au moins 0,05% en poids d'hafnium ( Hf ).

8. Matériau d'apport de soudure suivant la revendication 1, 2, 3, 4, 5, 6 ou 7,
qui contient au moins 0,01% en poids de lanthane ( La ).

9. Matériau d'apport de soudure suivant la revendication 1, 2, 3, 4, 5, 6, 7 ou 8,
qui contient au moins 0,05% en poids de silicium ( Si ).

10. Matériau d'apport de soudure suivant la revendication 1, 2, 3, 4, 5, 6, 7, 8 ou 9,
qui contient au moins 0,05% en poids de zirconium ( Zr ).

11. Utilisation d'un matériau d'apport de soudure suivant l'une ou plusieurs des revendications 1 à 10,
pour des matériaux à base de nickel.
